# FASCICULE DE BREVET EUROPEEN

(11) **EP 3 031 726 B1**
(45) Date de publication et mention de la délivrance du brevet: **02.11.2016**
(21) Numéro de dépôt: 14306966.4
(22) Date de dépôt: 08.12.2014
(51) Int. Cl.: B64D 15/12

(54) **Elément de voilure pour aéronef**
Tragflächenelement für Luftfahrzeug
Wing element for aircraft

(43) Date de publication de la demande: 15.06.2016
(73) Titulaire: Zodiac Aerotechnics, 78373 Plaisir Cedex (FR)
(72) Inventeur: Le Garrec, Stéphane, 95100 Argenteuil (FR); Portier, Philippe, 78610 Le Perray en Yvelines (FR); Buron, Martial, 78650 Beynes (FR); Delehelle, Adao, 78125 Gazeran (FR); Thillays, Bruno, 78650 Beynes (FR)
(74) Mandataire: Cabinet Plasseraud

(56) Documents cités:
- EP-A2- 0 749 894
- FR-A1- 2 993 241
- GB-A- 1 117 843
- US-B1- 6 283 411

## Description

La présente invention concerne un élément de voilure pour aéronef, et un procédé de protection d'un tel élément de voilure contre le givre. On entend par protection contre le givre aussi bien une action préventive contre l'apparition de givre sur l'élément de voilure, qu'une action destinée à faire disparaître du givre déjà qui est formé sur cet élément de voilure.

Dans certaines conditions atmosphériques, des parties de la voilure d'un aéronef en vol peuvent être sujettes à la formation et l'accumulation de glace. Tel est le cas notamment pour des bords d'attaque d'aile d'avion ou de pale d'hélicoptère. L'accumulation de glace peut alourdir sensiblement l'aéronef, et changer la capacité de portance de la voilure. Pour ces raisons, certains éléments de voilure sont munis de systèmes antigivrage, capables d'empêcher la formation de givre, ou de systèmes de dégivrage, capables de faire fondre de la glace qui est accumulée sur ces éléments. De tels systèmes peuvent éventuellement avoir les deux fonctions antigivrage et dégivrage.

Ainsi, de façon connue par exemple des documents EP 0749894 et WO 2007/135383, un élément de voilure pour aéronef, qui comprend une portion de structure rigide interne et un blindage qui est destiné à être exposé au milieu atmosphérique lors d'un vol de l'aéronef, peut comprendre en outre plusieurs composants superposés entre cette portion de structure et ce blindage. Chacun de ces composants est sous la forme d'une couche qui est disposée parallèlement à une surface de la portion de structure. Ces composants comprennent au moins les trois suivants, dans l'ordre d'énumération de ceux-ci en partant de la portion de structure :
- un premier capteur de température, qui comprend lui-même un premier film support et au moins une première piste d'un premier matériau conducteur électriquement, avec une valeur de résistivité électrique de ce premier matériau qui varie en fonction de sa température, le premier capteur étant connecté rigidement à la surface de la portion de structure ;
- un tapis électrothermique formant élément chauffant, qui est connecté rigidement au premier capteur ; et
- un film isolant électriquement, qui est relié rigidement au tapis électrothermique par une première face de ce film isolant, et connecté au blindage par une seconde face du même film isolant, et qui est capable de transférer de la chaleur entre ces première et seconde faces du film isolant.

Lorsqu'il est alimenté en courant électrique, le tapis électrothermique produit de la chaleur dont une partie au moins diffuse en direction du blindage, dans le but d'empêcher la formation de glace ou de faire fondre la glace qui se serait déjà accumulée sur celui-ci.

Le film isolant a pour fonction d'isoler électriquement le blindage par rapport à des composants internes de l'élément de voilure, notamment par rapport au tapis électrothermique. Il protège aussi certains de ces composants contre des décharges électriques qui peuvent survenir sur le blindage, notamment des décharges de foudre.

Enfin, le premier capteur de température a pour fonction de mesurer la température du tapis électrothermique, par exemple dans le but de réguler cette température.

Toutefois, un tel élément de voilure ne permet pas de connaître la température du blindage séparément de celle du tapis électrothermique, ni d'évaluer le flux de l'énergie thermique qui est transférée au blindage lorsque le tapis électrothermique est alimenté en courant électrique.

Un but de la présente invention est alors d'améliorer un tel élément de voilure pour permettre de mesurer la température du blindage séparément de celle du tapis électrothermique, et d'évaluer le flux d'énergie thermique qui est transféré au blindage.

Un but complémentaire est d'éviter que les modifications qui sont introduites par l'invention dans l'élément de voilure ne provoquent des points d'accumulation de chaleur entre le blindage et le tapis électrothermique lors d'un fonctionnement de ce dernier. En effet, de telles accumulations de chaleur localisées sont susceptibles de dégrader l'élément de voilure, notamment en altérant ou en déformant certains de ses composants.

Pour atteindre ces buts ou d'autres, un premier aspect de la présente invention propose un élément de voilure tel que rappelé précédemment, mais qui comprend en outre entre le tapis électrothermique et le film isolant :
- un second capteur de température, qui comprend lui-même un second film support et au moins une seconde piste d'un second matériau conducteur électriquement, avec une valeur de résistivité électrique du second matériau qui varie en fonction d'une température de celui-ci, le second capteur de température étant connecté rigidement au tapis électrothermique par une première face de ce second capteur, et au film isolant par une seconde face de ce même second capteur.

Grâce à la position du second capteur dans l'empilement des composants au sein de l'élément de voilure, la température qui est mesurée par ce second capteur est plus proche de la température réelle du blindage, en comparaison de la température qui est mesurée par le premier capteur.

Par ailleurs, le second capteur de température étant placé dans le flux d'énergie thermique qui est produit en direction du blindage lors d'un fonctionnement du tapis électrothermique, il est possible d'obtenir une évaluation de ce flux d'énergie thermique à partir de l'écart entre les deux températures qui sont mesurées respectivement à l'aide du premier et du second capteur.

Selon une caractéristique additionnelle de l'invention, pour le second capteur de température, la seconde piste forme des méandres sur le second film support, et un taux moyen d'occupation surfacique de la seconde piste sur le second film support, lorsqu'il est évalué dans une aire qui contient plusieurs méandres adjacents, est au moins égal à 50%.

De cette façon, des inhomogénéités à grande échelle de la conductivité thermique du second capteur de température, sont réduites. La seconde piste participe alors au transfert vers le blindage de la chaleur qui est produite par le tapis électrothermique lors d'un fonctionnement de ce dernier, d'une façon qui est sensiblement uniforme sur toute la surface de la portion de structure. L'apparition de points d'accumulation de chaleur est ainsi évitée.

Dans différentes réalisations de l'invention, l'élément de voilure peut équiper toute voilure fixe, mobile et/ou tournante, et en particulier former un segment de bord d'attaque d'aile d'avion ou de pale d'hélicoptère.

En outre, dans le second capteur de température, la seconde piste peut être située sur celle des faces du second film support qui est tournée vers le blindage. Ainsi, la température qui est mesurée à l'aide de ce second capteur est encore plus représentative de la température réelle du blindage.

Encore dans le second capteur de température, une épaisseur du second film support peut être comprise entre 25 µm (micromètre) et 250 µm, lorsqu'elle est mesurée perpendiculairement à la surface de la portion de structure. Une telle épaisseur contribue à un compromis entre une résistance mécanique de ce capteur qui est suffisante, une température mesurée qui est plus proche de la température réelle du blindage, et éviter de créer une résistance thermique trop importante entre le tapis électrothermique et le blindage.

Avantageusement aussi, ce second film support peut être à base de polyimide, notamment à base du matériau polymère désigné par Kapton® et commercialisé par DuPont de Nemours.

Avantageusement encore, le taux moyen d'occupation surfacique de la seconde piste sur le second film support, lorsqu'il est évalué dans l'aire qui contient plusieurs méandres adjacents de la seconde piste, peut être au moins égal à 65%, de préférence au moins égal à 75%.

Enfin, la surface de la portion de structure peut être constituée d'un matériau qui est isolant thermiquement, notamment un matériau à base de résine époxy. La chaleur produite par le tapis électrothermique est alors transférée dans une plus grande proportion au blindage. Simultanément, la température qui est mesurée à l'aide du premier capteur est encore plus représentative de la température réelle du tapis électrothermique.

Un second aspect de l'invention propose un procédé de protection d'un élément de voilure d'aéronef contre du givre, lorsque cet élément de voilure est conforme au premier aspect de l'invention, le procédé comprenant :
- l'alimentation électrique du tapis électrothermique de façon à chauffer l'élément de voilure ;
- la mesure de deux températures en utilisant pour l'une le premier capteur de température et pour l'autre le second capteur de température ; et
- à partir des deux températures mesurées, évaluer un flux d'énergie thermique qui est délivré au blindage.

D'autres particularités et avantages de la présente invention apparaîtront dans la description ci-après d'exemples de réalisation non limitatifs, en référence aux dessins annexés, dans lesquels :

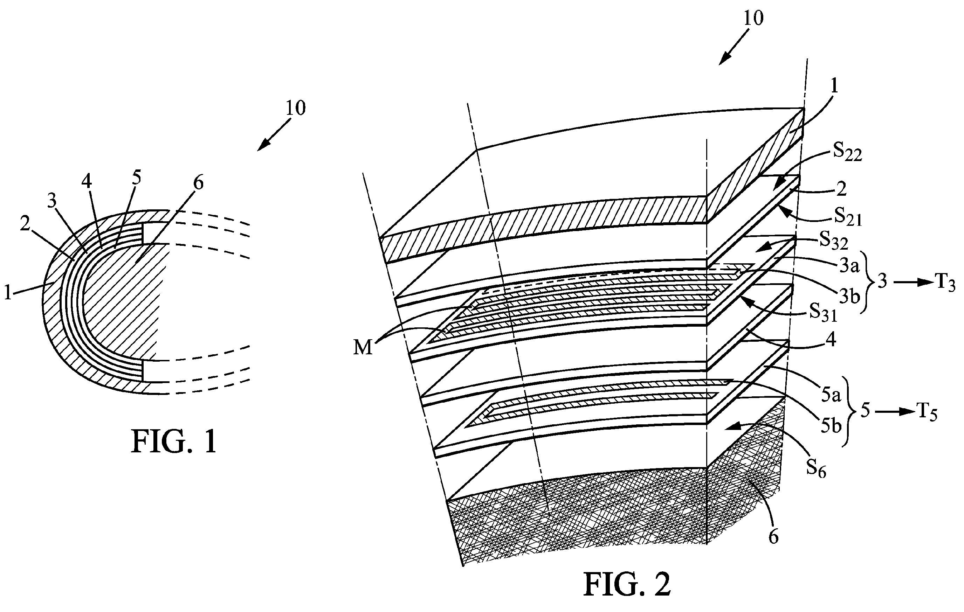

- la figure 1 est une vue en coupe d'un élément de voilure conforme à la présente invention ; et
- la figure 2 est une vue éclatée en perspective de l'élément de voilure de la figure 1.

Pour raison de clarté, les dimensions des éléments qui sont représentés dans ces figures ne correspondent ni à des dimensions réelles ni à des rapports de dimensions réels. En outre, des références identiques qui sont indiquées dans les deux figures désignent des éléments identiques ou qui ont des fonctions identiques.

Les références utilisées ont les significations suivantes :
- 10: élément de voilure dans son ensemble, pour aéronef
- 1: blindage
- 2: film isolant électriquement
- S₂₁, S₂₂: deux faces opposées du film 2
- 3: capteur de température, dit capteur externe
- 3a: film support du capteur 3
- 3b: piste du capteur 3
- M: méandres de la piste 3b sur le film support 3a
- S₃₁, S₃₂: deux faces opposées du capteur 3
- 4: tapis électrothermique
- 5: autre capteur de température, dit capteur interne
- 5a: film support du capteur 5
- 5b: piste du capteur 5
- 6: structure rigide interne de l'élément de voilure
- S₆: surface de la structure 6
- T₃, T₅: températures mesurées respectivement par les capteurs 3 et 5

Le blindage 1 est destiné à être exposé au milieu atmosphérique lors d'un vol de l'aéronef, et procure à l'élément de voilure 10 sa forme externe, par exemple une forme de bord d'attaque. Le blindage 1 peut être en aluminium ou en titane, par exemple.

La structure 6 assure un maintien mécanique de l'élément de voilure 10. Elle peut avoir différentes compositions, notamment selon que l'élément de voilure 10 est une partie de voilure fixe ou mobile, telle qu'un bord d'attaque d'aile d'avion, ou une partie de voilure tournante, telle qu'une pale d'hélicoptère ou un segment de pale. De préférence, la surface S₆ de la structure 6 est constituée de matériau isolant thermiquement, tel que de la résine époxy par exemple. La surface S₆ peut avoir une forme quelconque, notamment cylindrique ou à double courbure.

Le capteur interne 5, le tapis électrothermique 4, le capteur externe 3, le film isolant 2 et le blindage 1 forment un empilement sur la surface S₆ de la structure 6, qui est conforme à la courbure que peut présenter cette surface S₆. Une telle mise en forme de l'empilement est facilitée par la structure en couches et la souplesse de chaque composant de l'empilement. Tous ces différents composants peuvent ensuite être maintenus solidaires entre eux par des couches de connexion intermédiaires, non représentées, telles que des couches de matériau adhésif ou de résine fusible.

Le film isolant 2 peut être en Kapton®, et possède une épaisseur qui est adaptée pour isoler électriquement le blindage 1 des composants plus internes dans l'empilement, notamment pour l'isoler du tapis électrothermique 4. Cette épaisseur peut être de l'ordre de 100 µm, par exemple. De façon générale, l'épaisseur de la partie de l'empilement qui est située au dessus du tapis électrothermique 4, en direction du blindage 1, est avantageusement réduite pour améliorer l'efficacité et la rapidité du chauffage du blindage 1 lors d'un fonctionnement du tapis électrothermique 4. Le film 2 peut être connecté au capteur de température externe 3 par sa face S₂₁, et au blindage 1 par sa face S₂₂.

Le tapis électrothermique 4 peut être d'un type disponible commercialement, notamment pour la fonction de dégivrage d'éléments de voilure d'aéronef. Par exemple, ce peut être un tissu ou un treillis de fibres, sur lequel un métal a été vaporisé. L'injection d'un courant électrique dans un tel tapis produit un flux de chaleur par effet Joule. Grâce à la nature isolante thermiquement de la surface S₆ de la structure 6, une partie principale de ce flux de chaleur est orientée vers le blindage 1, à travers le capteur externe 3, le film isolant 2 et les couches de connexion intermédiaires, pour produire un chauffage préventif du blindage 1 contre la formation de givre, ou un chauffage de dégivrage. L'épaisseur du tapis électrothermique 4 peut être comprise entre 100 µm et 1 mm (millimètre), par exemple.

Les deux capteurs de température 3 et 5 peuvent avoir des constitutions similaires, mais sans que cela soit nécessaire.

Le capteur interne 5, qui a été désigné par premier capteur de température dans la partie générale de la présente description, est situé entre le tapis électrothermique 4 et la structure 6. Il est constitué par la piste continue 5b d'un matériau conducteur électriquement, qui a été formée, transférée, imprimée ou déposée par électrolyse sur le film support 5a. Le matériau de la piste 5b est sélectionné pour présenter une valeur de résistivité électrique qui varie en fonction de la température. Ce matériau peut être du cuivre, ou l'un des alliages connus sous les désignations de constantan® ou chromel®. Par exemple, pour le cuivre, la variation de la résistivité électrique en fonction de la température est environ 0,393%/°C, en valeur relative. Typiquement, la piste 5b peut être dimensionnée pour présenter une résistance électrique qui est comprise entre 100 ohms et 1000 ohms. En utilisant un principe de mesure qui est connu par ailleurs, la tension électrique qui est mesurée entre deux extrémités de la piste 5b lorsqu'un courant électrique est injecté dans cette piste, est représentative de la valeur de la température à l'emplacement du capteur 5. Le film support 5a peut aussi être en Kapton® avec une épaisseur de 100 µm, par exemple. Préférablement, le capteur 5 peut être orienté dans l'empilement de sorte que la piste 5b soit située sur celle des faces du film support 5a qui est tournée vers le tapis électrothermique 4. Ainsi, la température T₅ qui est mesurée à l'aide du capteur 5 est plus représentative de la température réelle du tapis 4.

Le capteur externe 3, qui a été désigné par second capteur de température dans la partie générale de la présente description, est plus particulièrement l'objet de la présente invention. Il est situé entre le tapis électrothermique 4 et le film isolant 2, relié au tapis 4 par sa face S₃₁ et au film 2 par sa face S₃₂. Il est constitué par la piste continue 3b d'un matériau conducteur électriquement, qui a été formée, transférée, imprimée ou déposée par électrolyse sur le film support 3a. Les matériaux du film support 3a et de la piste 3b peuvent être similaires à ceux du capteur 5, mais pas nécessairement. Toutefois, le principe de la mesure de température par le capteur 3 est identique à celui du capteur 5. La piste 3b peut aussi être dimensionnée pour présenter une résistance électrique qui est comprise entre 100 ohms et 1000 ohms. Préférablement, le capteur 3 peut être orienté dans l'empilement de sorte que sa piste 3b soit située sur la face S₃₂ du capteur 3 qui est tournée vers le film isolant 2. Ainsi, la température T₃ qui est mesurée à l'aide du capteur 3 est plus représentative de la température réelle du blindage 1.

A cause de la position du capteur 3 dans l'empilement entre le tapis électrothermique 4 et le blindage 1, les deux considérations suivantes évitent que le capteur 3 ne perturbe significativement le dégivrage du blindage 1, et que le fonctionnement du tapis électrothermique 4 cause des dommages à l'élément de voilure 10.

Tout d'abord, le capteur 3 possède avantageusement une résistance thermique qui est faible, entre ses deux faces S₃₁ et S₃₂. Ainsi, il provoque un retard limité, dans la diffusion en direction du blindage 1 de la chaleur qui est produite par le tapis électrothermique 4. Mais simultanément, le capteur 3 présente préférablement une résistance mécanique qui est suffisante pour faciliter son assemblage dans l'empilement. Pour cela, le film support 3a peut avoir une épaisseur qui est comprise entre 25 µm et 250 µm, par exemple égale à 100 µm. En outre, le film support 3a peut être avantageusement en Kapton®.

Ensuite, la valeur de la résistance thermique du capteur 3, vis-à-vis du flux de chaleur qui est produit par le tapis électrothermique 4 en direction du blindage 1, présente préférablement des variations qui sont limitées pour des déplacements parallèles à la surface S₆. En effet, une valeur localement plus importante pour cette résistance thermique pourrait provoquer une surchauffe à cet endroit lors d'un fonctionnement du tapis électrothermique 4, susceptible de dégrader l'élément de voilure 10. Or la valeur locale de la résistance thermique du capteur 3 dépend notamment de la présence ou non d'un segment de la piste 3b à cet endroit. Selon l'invention, la piste 3b doit recouvrir en moyenne au moins 50% de la surface du film support 3a pour limiter de telles inhomogénéités de la résistance thermique. La combinaison de cette caractéristique avec l'intervalle de valeurs pour la résistance électrique de la piste 3b aboutit à réaliser cette piste 3b en forme d'allers-retours, c'est-à-dire de méandres M, sur le film support 3a. Ces méandres peuvent néanmoins avoir des formes et des motifs quelconques.

A partir de ces considérations, l'Homme du métier sait sélectionner des valeurs adéquates pour dimensionner la piste 3b. Par exemple, lorsqu'elle est en cuivre avec une épaisseur de 100 µm et possède une largeur de 0,5 mm (millimètre), la piste 3b peut avoir une longueur totale de 500 m (mètre) mesurée en suivant tous les méandres M. L'espacement entre deux segments de la piste 3b qui sont voisins dans les méandres M peut alors être environ 0,1 mm, ce qui assure que la conductivité thermique à travers le capteur 3 apparaisse comme étant sensiblement uniforme vis-à-vis du bouclier 1.

On décrit maintenant un procédé d'utilisation de l'élément de voilure 10.

Lors d'une alimentation continue du tapis électrothermique 4 en courant électrique, les deux températures T₃ et T₅ peuvent être mesurées séparément et simultanément, au moyen des deux capteurs distincts 3 et 5 prévus par l'invention. Alors le flux d'énergie thermique qui diffuse à partir du tapis électrothermique 4 en direction du blindage 1 peut être estimé en appliquant la loi de Fick : dP = (T₅ - T₃)/Rₜₕ, où dP désigne le flux d'énergie thermique, c'est-à-dire la densité de puissance qui diffuse, par exemple exprimée en W/cm² (watt par centimètre-carré), et Rₜₕ est la résistance thermique entre le tapis 4 et le capteur externe 3 par unité de surface s'étendant parallèlement à la surface S₆.

Eventuellement, le tapis électrothermique 4 peut être alimenté par intermittence, avec des créneaux de courant électrique séparés par des durées de relaxation thermique. Alors, l'analyse de la vitesse de variation de la température T₃ qui est mesurée par le capteur externe 3 pendant les durées de relaxation, peut fournir une indication sur la présence ou non de glace sur le blindage 1, et éventuellement aussi une indication sur l'épaisseur de la couche de glace. En effet, l'évacuation vers le milieu atmosphérique de l'énergie thermique qui est apportée par chaque créneau de courant électrique, est modifiée par la présence éventuelle de glace sur le blindage 1. Une telle détection de la présence de glace, et possiblement aussi l'évaluation de l'épaisseur de la couche de glace, sont rendues plus fiables et plus précises grâce à l'utilisation du capteur externe 3 introduit par la présente invention, en plus du capteur interne 5.

Bien entendu, l'invention peut être reproduite en modifiant certains aspects secondaires qui ont été mentionnés dans la description détaillée précédente. En particulier, les valeurs numériques et les matériaux énumérés n'ont été cités qu'à titre d'exemples.

## Revendications

1. Elément de voilure (10) pour aéronef, comprenant une portion de structure rigide interne (6) et un blindage (1) destiné à être exposé à un milieu atmosphérique lors d'un vol de l'aéronef, et comprenant en outre au moins les trois composants suivants qui sont superposés entre une surface (S₆) de la portion de structure (6) et le blindage (1) dans l'ordre d'énumération desdits trois composants en partant de la portion de structure, chaque composant étant en forme de couche disposée parallèlement à la surface de la portion de structure :
- un premier capteur de température (5) comprenant un premier film support (5a) et au moins une première piste (5b) d'un premier matériau conducteur électriquement, avec une valeur de résistivité électrique du premier matériau qui varie en fonction d'une température dudit premier matériau, ledit premier capteur étant connecté rigidement à la surface (S₆) de la portion de structure (6) ;
- un tapis électrothermique (4) formant élément chauffant, connecté rigidement au premier capteur (5) ; et
- un film isolant électriquement (2), relié rigidement au tapis électrothermique (4) par une première face (S₂₁) dudit film isolant, et connecté au blindage (1) par une seconde face (S₂₂) dudit film isolant, et capable de transférer de la chaleur entre lesdites première et seconde faces dudit film isolant,
**caractérisé en ce que** l'élément de voilure (10) comprend en outre entre le tapis électrothermique (4) et le film isolant (2) :
- un second capteur de température (3) comprenant un second film support (3a) et au moins une seconde piste (3b) d'un second matériau conducteur électriquement, avec une valeur de résistivité électrique du second matériau qui varie en fonction d'une température dudit second matériau, ledit second capteur de température étant connecté rigidement au tapis électrothermique (4) par une première face (S₃₁) dudit second capteur, et au film isolant (2) par une seconde face (S₃₂) dudit second capteur,
et **en ce que** la seconde piste (3b) forme des méandres (M) sur le second film support (3a), et un taux moyen d'occupation surfacique de la seconde piste sur le second film support, évalué dans une aire qui contient plusieurs méandres adjacents de la seconde piste, est au moins égal à 50%.

2. Elément de voilure selon la revendication 1, formant un segment de bord d'attaque d'aile d'avion ou de pale d'hélicoptère.

3. Elément de voilure selon la revendication 1 ou 2, dans lequel, dans le second capteur de température (3), la seconde piste (3b) est située sur une face du second film support (3a) tournée vers le blindage (1).

4. Elément de voilure selon l'une quelconque des revendications précédentes, dans lequel, dans le second capteur de température (3), une épaisseur du second film support (3a) est comprise entre 25 µm et 250 µm, mesurée perpendiculairement à la surface (S₆) de la portion de structure (6).

5. Elément de voilure selon l'une quelconque des revendications précédentes, dans lequel, dans le second capteur de température (3), le second film support (3a) est à base de polyimide.

6. Elément de voilure selon l'une quelconque des revendications précédentes, dans lequel, pour le second capteur de température (3), le taux moyen d'occupation surfacique de la seconde piste (3b) sur le second film support (3a), évalué dans l'aire qui contient plusieurs méandres (M) adjacents de la seconde piste, est au moins égal à 65%, de préférence au moins égal à 75%.

7. Elément de voilure selon l'une quelconque des revendications précédentes, dans lequel la surface (S₆) de la portion de structure (6) est constituée d'un matériau isolant thermiquement, notamment un matériau à base de résine époxy.

8. Procédé de protection d'un élément de voilure d'aéronef contre du givre, ledit élément de voilure (10) étant conforme à l'une quelconque des revendications précédentes, le procédé comprenant :
- alimenter électriquement le tapis électrothermique (4) de façon à chauffer l'élément de voilure (10) ;
- mesurer deux températures (T₅, T₃) en utilisant pour l'une le premier capteur de température (5) et pour l'autre le second capteur de température (3) ; et
- à partir des deux températures (T₅, T₃) mesurées, évaluer un flux d'énergie thermique qui est délivré au blindage (1).

## Patentansprüche

1. Tragflächenelement (10) für ein Luftfahrzeug, umfassend einen inneren steifen Strukturabschnitt (6) und eine Verkleidung (1), die vorgesehen ist, bei einem Flug des Luftfahrzeugs einer atmosphärischen Umgebung ausgesetzt zu sein, und ferner umfassend zumindest die drei folgenden Komponenten, die zwischen einer Fläche (S₆) des Strukturabschnitts (6) und der Verkleidung (1) in der angegebenen Reihenfolge der drei Komponenten, ausgehend vom Strukturabschnitt, übereinanderliegen, wobei jede Komponente die Form einer parallel zur Fläche des Strukturabschnitts angeordneten Schicht aufweist:
- einen ersten Temperatursensor (5), der eine erste Trägerfolie (5a) und zumindest eine erste Bahn (5b) aus einem ersten elektrisch leitenden Material umfasst, wobei ein spezifischer elektrischer Widerstandswert des ersten Materials in Abhängigkeit von einer Temperatur des ersten Materials variiert, wobei der erste Sensor mit der Fläche (S₆) des Strukturabschnitts (6) starr verbunden ist;
- einen mit dem ersten Sensor (5) starr verbundenen elektrothermischen Teppich (4), der ein Heizelement ausbildet; und
- eine elektrisch isolierende Folie (2), die durch eine erste Seite (S₂₁) der isolierenden Folie starr mit dem elektrothermischen Teppich (4) verbunden und durch eine zweite Seite (S₂₂) der isolierende Folie mit der Verkleidung (1) verbunden und in der Lage ist, zwischen der ersten und der zweiten Seite der isolierenden Folie Wärme zu übertragen,
**dadurch gekennzeichnet, dass** das Tragflächenelement (10) zwischen dem elektrothermischen Teppich (4) und der isolierenden Folie (2) ferner Folgendes umfasst:
- einen zweiten Temperatursensor (3), der eine zweite Trägerfolie (3a) und zumindest eine zweite Bahn (3b) aus einem zweiten elektrisch leitenden Material umfasst, wobei ein spezifischer elektrischer Widerstandswert des zweiten Materials in Abhängigkeit von einer Temperatur des zweiten Materials variiert, wobei der zweite Temperatursensor durch eine erste Seite (S₃₁) des zweiten Sensors mit dem elektrothermischen Teppich (4) und durch eine zweite Seite (S₃₂) des zweiten Sensors mit der isolierenden Folie (2) starr verbunden ist,
und dadurch, dass die zweite Bahn (3b) auf der zweiten Trägerfolie (3a) Mäandern (M) ausbildet und ein durchschnittlicher Oberflächenbelegungsgrad der zweiten Bahn auf der zweiten Trägerfolie, gemessen in einem Bereich, der mehrere benachbarte Mäandern der zweiten Bahn beinhaltet, zumindest 50 % beträgt.

2. Tragflächenelement nach Anspruch 1, das ein Anströmkantensegment eines Flugzeugflügels oder Hubschrauber-Rotorblatts ausbildet.

3. Tragflächenelement nach Anspruch 1 oder 2, wobei sich beim zweiten Temperatursensor (3) die zweite Bahn (3b) auf einer der Verkleidung (1) zugewandten Seite der zweiten Trägerfolie (3a) befindet.

4. Tragflächenelement nach einem der vorangehenden Ansprüche, wobei beim zweiten Temperatursensor (3) eine Stärke der zweiten Trägerfolie (3a), senkrecht zur Fläche (S₆) des Strukturabschnitts (6) gemessen, 25 µm bis 250 µm beträgt.

5. Tragflächenelement nach einem der vorangehenden Ansprüche, wobei beim zweiten Temperatursensor (3) die zweite Trägerfolie (3a) auf Polyimidbasis ist.

6. Tragflächenelement nach einem der vorangehenden Ansprüche, wobei beim zweiten Temperatursensor (3) der durchschnittliche Oberflächenbelegungsgrad der zweiten Bahn (3b) auf der zweiten Trägerfolie (3a), gemessen in dem Bereich, der mehrere benachbarte Mäandern (M) beinhaltet, zumindest 65 %, vorzugsweise zumindest 75 %, beträgt.

7. Tragflächenelement nach einem der vorangehenden Ansprüche, wobei die Fläche (S₆) des Strukturabschnitts (6) aus einem wärmeisolierenden Material, insbesondere aus einem Material auf Epoxidharzbasis, besteht.

8. Verfahren zum Schutz eines Tragflächenelements eines Luftfahrzeugs vor Eis, wobei das Tragflächenelement (10) einem der vorangehenden Ansprüche entspricht, wobei das Verfahren Folgendes umfasst:
- elektrisches Versorgen des elektrothermischen Teppichs (4), um das Tragflächenelement (10) zu beheizen;
- Messen von zwei Temperaturen (T₅, T₃) unter Verwendung des ersten Temperatursensors (5) für die eine und des zweiten Temperatursensors (3) für die zweite und
- Ermitteln eines Stroms thermischer Energie, welcher der Verkleidung (1) bereitgestellt wird, anhand der beiden Temperaturen (T₅, T₃).

## Claims

1. Aircraft wing element (10) comprising a rigid internal structure portion (6) and a shield (1) intended to be exposed to atmosphere during a flight of the aircraft, and also comprising at least the three following components which are superimposed between a surface (S₆) of the structure portion (6) and the shield (1) in the order of listing of said three components, starting from the structure portion, each component being in the form of a layer arranged parallel to the surface of the structure portion:
- a first temperature sensor (5), comprising a first support film (5a) and at least one first track (5b) of a first electrically conductive material with an electrical resistivity value of the first material that varies as a function of a temperature of said first material, said first sensor being rigidly connected to the surface (S₆) of the structure portion (6);
- an electrothermal mat (4) forming a heating element, rigidly connected to the first sensor (5); and
- an electrically insulating film (2), rigidly connected to the electrothermal mat (4) by a first face (S₂₁) of said insulating film, and connected to the shield (1) by a second face (S₂₂) of said insulating film, and capable of transferring heat between said first and second faces of said insulating film,
**characterized in that** the wing element (10) also comprises between the electrothermal mat (4) and the insulating film (2):
- a second temperature sensor (3), comprising a second support film (3a) and at least a second track (3b) of a second electrically conductive material, with an electrical resistivity value of the second material which varies as a function of a temperature of said second material, said second temperature sensor being rigidly connected to the electrothermal mat (4) by a first face (S₃₁) of said second sensor, and to the insulating film (2) by a second face (S₃₂) of said second sensor, and **in that** the second track (3b) forms meanders (M) on the second support film (3a), and an average rate of surface occupation of the second track on the second support film, evaluated in an area which contains several adjacent meanders of the second track, is at least equal to 50%.

2. Wing element according to claim 1, forming a leading edge segment of an aeroplane wing or a helicopter blade.

3. Wing element according to claim 1 or 2, in which, in the second temperature sensor (3), the second track (3b) is situated on a face of the second support film (3a) turned towards the shield (1).

4. Wing element according to any one of the preceding claims, in which, in the second temperature sensor (3), a thickness of the second support film (3a) is comprised between 25 µm and 250 µm, measured perpendicularly to a surface (S₆) of the structure portion (6).

5. Wing element according to any one of the preceding claims, in which, in the second temperature sensor (3), the second support film (3a) is based on polyimide.

6. Wing element according to any one of the preceding claims, in which, for the second temperature sensor (3), the average surface occupation rate of the second track (3b) on the second support film (3a), evaluated in the area that contains several adjacent meanders (M) of the second track, is at least equal to 65%, preferably at least equal to 75%.

7. Wing element according to any one of the preceding claims, in which the surface (S₆) of the structure portion (6) is constituted by a thermally insulating material, in particular a material based on epoxy resin.

8. Method for protecting an aircraft wing element against ice, said wing element (10) being according to any one of the preceding claims, the method comprising:
- supplying electricity to the electrothermal mat (4) so as to heat the wing element (10);
- measuring two temperatures (T₅, T₃) by using the first temperature sensor (5) for one of said temperatures and the second temperature sensor (3) for the other one of said temperatures; and
- based on the two measured temperatures (T₅, T₃), evaluating a thermal energy flow that is delivered to the shield (1).
